# EUROPEAN PATENT APPLICATION

(11) **EP 1 026 588 A2**
(43) Date of publication of application: **09.08.2000**
(21) Application number: 00300229.2
(22) Date of filing: 13.01.2000
(51) Int. Cl.: G06F 9/46

(54) **Performing complex transactions in a computer network**

(30) Priority: 28.01.1999 US 238726
(71) Applicant: International Business Machines Corporation, Armonk, N.Y. 10504 (US)
(72) Inventor: Duri, Sastry S., Winchester, Hampshire SO21 2JN (GB); Viveros, Marisa, Winchester, Hampshire SO21 2JN (GB)
(74) Representative: Litherland, David Peter

(57) **Abstract**

A system and a method enables users of mobile devices to perform complex business transactions in a disconnected mode. The method includes transmitting operations to be performed on the data rather than transmitting the actual modified data. Complex operations are composed from simple operations, using constraints to express the conditions under which the operations can be carried-out. The server receives the operations, executes the operations whose constraints are satisfied, and transmits the results back to the client.

## Description

The invention relates generally to the performing of complex transactions in computer networks.

A pervasive computing environment generally involves using mobile devices such as portable computers, pagers, smart phones, personal digital assistants, set top boxes, etc., enabling access to data and services from anywhere at anytime. Mobile applications which are implemented for use in conjunction with such devices require access to persistent information regardless of whether or not a mobile device is connected to a network. Such a task can be accomplished by keeping a local replica of necessary resources, and periodically connecting to the server to update information. When a disconnected device reconnects, any data that was modified while the device was disconnected needs to be propagated to the network server and any updates on the server needs to be sent to the device. This process includes transmitting actual data across the connection, and is known as data synchronization. For example, if the user modified a local replica, then the corresponding entries in the server copy are replaced with entries from local replica, and vice versa. Data synchronization technique is only useful when the user has the authority to update the server resources.

Currently, however, data synchronization is the predominant technique used in the mobile applications arena for managing personal resources such as to-do- lists, e-mail, calendar, etc., and providing pervasive connectivity to enable client/server interactions. Other applications are limited to retrieving information from a server such as the GPS systems.

Consider the case of online banking. Presently, a mobile user can download account information and perform banking transactions such as transferring money from one account to another while a connection to an online banking system is maintained. However, once the user is disconnected from the system the user is limited to accessing only the local account information, i.e., the user cannot transfer money between the accounts without the connection to the banking system. Even if the user is able to keep track of the transactions performed in local mode and calculate a running balance, the user cannot subsequently update the server account databases with new account balance information because the user lacks the authority to modify the data managed by the server database. Consequently, the user is forced to keep an open connection to the bank server to execute individual transactions.

According to one aspect of the invention there is provided a method for performing complex transactions in a computer network in which a mobile client device communicates with a server device, the method including: building complex transactions on the mobile client device while disconnected from the server device, including the steps of: specifying one or more operations associated with service requests to be performed by one or more remote servers; specifying constraints associated with said one or more operations, the constraints describing one or more conditions under which said one or more operations can be performed; formatting said one or more operations with the constraints into a message forming a complex transaction for transmission over a communication medium; and storing the formatted message in a local memory.

According to yet further aspects of the invention there are provided program storage devices as defined in the appended claims on which program code is stored which when executed enables (i) a user to build complex transactions; and (ii) a servicing device to receive operations which specify services to be processed.

According to another aspect of the invention there is provided a mobile client device in which complex transactions may be built while disconnected from a server device, the mobile client device including: a mobile application module for receiving data input indicating one or more user service requests, the mobile application module being responsive to the data input received to transform the data input relating to said one or more user service requests into a message format forming a complex transaction; and a mobile application coordinator for communicating with the mobile application and receiving the complex transaction, the mobile application coordinator further accumulating one or more said complex transactions for transmission to the servicing node after a connection is established.

According to yet another aspect of the invention there is provided a system for performing complex transactions in a computer network in which a mobile client device may communicate with a server device, the mobile client device being enabled to build complex transactions while disconnected from a server device for transmission to a servicing node, the mobile client device including: a mobile application module for receiving data input indicating one or more user service requests, the mobile application module being responsive to the data input received to transform the data input relating to said one or more user service requests into a message format forming a complex transaction; and a mobile application coordinator for communicating with the mobile application and receiving the complex transaction, the mobile application coordinator further accumulating one or more said complex transactions for transmission to the servicing node any time after a connection is established.

Preferably the system further includes: a remote application coordinator which receives said one or more complex transactions from the mobile application coordinator, the remote application coordinator further extracting operations associated with said one or more user service requests from the complex transactions received and routing said operations to designated servicing nodes for servicing the operations. It is further preferred that the remote application coordinator further receives results of the operations performed from the servicing nodes.

It is yet a further preference that the remote application coordinator further communicates the results to the mobile application coordinator any time after a connection to the mobile device is established.

In a preferred system the operations include one or more constraints under which the operations can be performed, with the one or more constraints preferably including results of previous operations.

The mobile application module of the mobile device preferably includes: a user interface module which enables a user to enter requests and view responses to prior requests; a message formatter for formatting information gathered by the user interface module into a format according to a predetermined grammar, the format suitable for transmission over a communications medium, the message formatter further translating messages received over the communications medium into a format suitable for presentation to the user via the user interface module; and a message communicator for communicating the requests and the responses to and from the mobile application coordinator, the message communicator further enabling archiving of the requests and the responses.

Thus the present invention enables the foregoing transactions by directing the mobile applications to send transactional instructions rather than the updated data to the server systems when a connection is eventually established. To enable such transactions the present invention provides a novel method which enables users of mobile devices to perform complex business transactions in a disconnected mode. This method includes transmitting operations to be performed on the data rather than transmitting the actual modified data. Complex operations are composed from simple operations, using constraints to express the conditions under which the operations can be carried-out. The server receives the operations and updates server side data repository, e.g., database, mail database, file system etc., in accordance with semantics associated with the operations.

An operation composition is used to construct a complex operation from one or more simple operations in a disconnected mode, and the complex operation is uploaded to a server for processing. Each operation can be associated with a set of constraints which are based on data available in the mobile device. The constraints dictate the conditions under which a particular operation can be carried out at the server. An example of a constraint is provided by the following illustrative scenario. Xa and Xb own a joint bank account, wherein Xa and Xb have downloaded account data to their individual mobile devices. The downloaded data, however, may not be the most updated data available in the account because the account data may have been changed after Xa and Xb downloaded the data. Accordingly, before Xa can pay an electricity bill using the mobile device, Xa must make sure that the current account balance contains at least an amount equal to the electricity bill to prevent over- drafting from the account. Similarly, before Xb independently pays for another bill using Xb's mobile device, Xb checks if the account balance has more than, for example, $1000. Conditions such as the account balance being at least the amount of the bill, or the account balance having more than $1000, are some examples of constraints submitted to the server along with the operation of account transactions when the mobile device connects to the server. In addition to constraints regarding the state of data residing in the server, a user may specify in a message, a dependency of an operation which may be performed contingent on the success or failure of previous operations. For example, a message may include an operation, Op1, to transfer funds from account A to account B if the account A has funds more than $500. The message may later include another operation, Op2, to transfer funds from account C to account B if Op1 fails.

Thus,in one application of the invention, a user is enabled to truly benefit from mobile computing by executing transactions locally on a mobile device even though the device is not connected to a server system, and being able to transmit corresponding instructions together with any constraints to the bank server for execution when a connection is eventually established.

Therefore, a client is enabled to prepare an electronic message having one or more service requests in a disconnected mode, then connect briefly to the server and transmit the request message to the server. For example, in the case of the foregoing example, the account transfer instructions rather than the new account balances are transmitted to the online banking system when the mobile station connects to the system. Furthermore, the server then interprets the electronic message and deliver the services requested by the client. The client is further enabled to connect to the server, sometime after transmitting the request, to retrieve the response to its request.

Preferred embodiments of the present invention will now be described, by way of example only, with reference to the accompanying drawings in which:
Fig. 1 is an example of a basic mobile device of the present invention;
Fig. 2 illustrates a block diagram of a simple computer network;
Fig. 3 illustrates the client application components of the present invention;
Fig. 4 is an example of application architecture of the present invention;
Fig. 5 illustrates a grammar used in building a message in the present invention;
Fig. 6 shows an example of a completed message in the present invention; and
Fig. 7 shows a format of a message sent across the network.

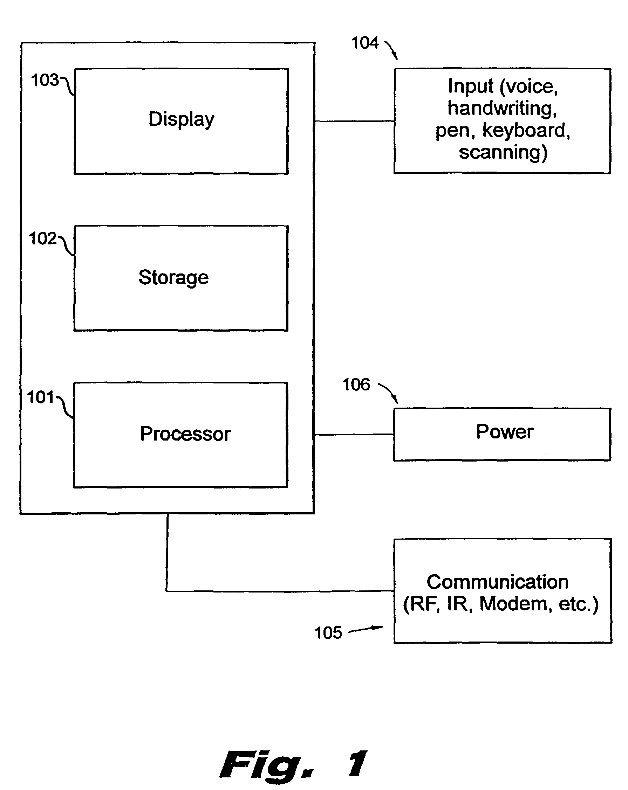

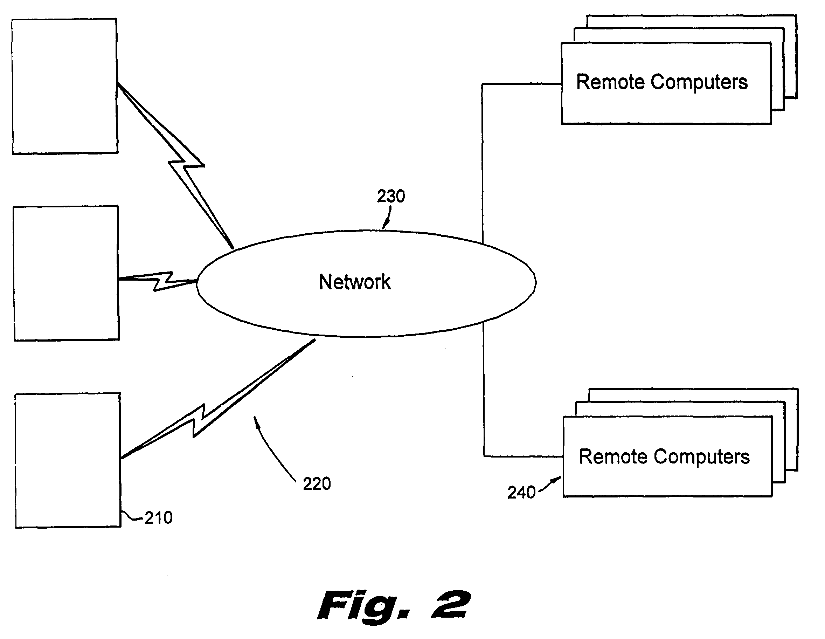

The present invention is directed to a system and method for enabling mobile computer clients to perform complex business transactions without first having to establish a connection to appropriate servers. As shown in Figure 1, a typical mobile computer includes a processor 101, a storage device 102, a display unit 103, one or more data input device for accepting input data such as voice, handwriting, pen, keyboard, and others 104, one or more communication devices including but not limited to devices such as wired or cellular modem, infrared, radio frequency (RF), and others 105, and a power supply 106. In a typical networked environment, as shown in Figure 2, a plurality of mobile computers 210 maintains a connection 220 to a computer network 230 and to a plurality of resources residing on servers 240.

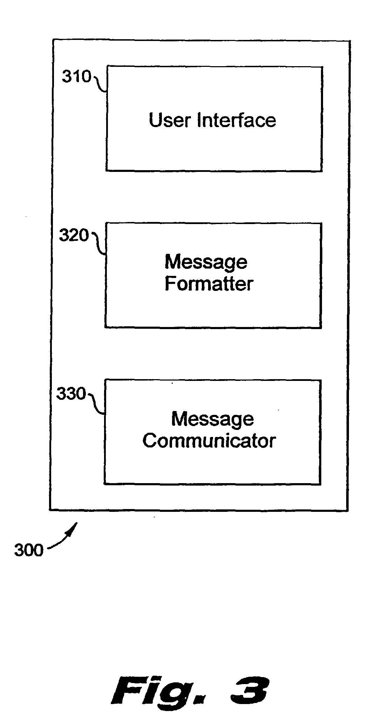

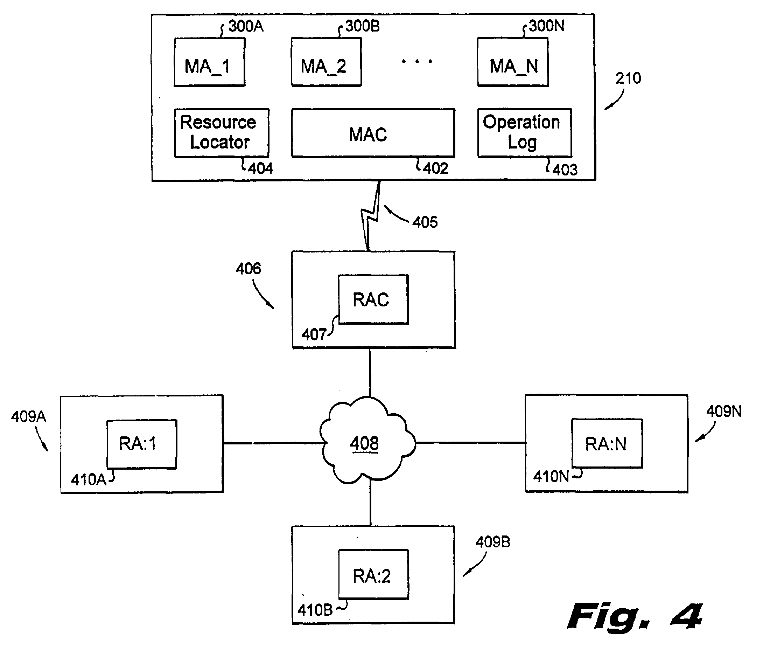

In the preferred embodiment, a mobile application 300 of the present invention as shown in Figure 3 includes three modules: 1) a user interface (UI) 310 module, 2) a message formatter (MF) 320 module, and 3) a message communicator (MC) 330 module. UI 310 generally gathers information from the user and displays output messages to the user. MF 320 formats user inputs into messages suitable for transmission over a communication medium, and translates messages received from the communication medium into a format to be presented to the user. MC 330 generally interacts with MAC (402 Figure 4) to send, receive and archive messages. MAC will be described in more detail with reference to Figure 4.

Figure 4 illustrates an example of the application architecture of the present invention. The application architecture generally comprises one or more mobile applications 300A,..,300N, a mobile application coordinator (MAC) 402, an operation log 403, and a resource locator 404(RL) on the mobile device 210, and a remote application coordinator (RAC) 407 on remote computers 406, and a set of remote applications (RA) 410A, 410B,.., 410N on remote computers 409A, 409B,..,409N respectively. Typically, a mobile application (MA) 300 composes request messages as will be described below and transfers the messages to MAC 402. MAC 402 accumulates request messages from mobile applications 300 and keeps them in the operation log 403. Accumulated messages are eventually transmitted to RAC 407 when the user subsequently establishes a connection to the remote computer. RAC 407 routes the individual messages to corresponding remote applications 410A,..,410N via a network 408. The remote applications 410A,..,410N service the request and return responses to RAC 407 which keeps the responses in a response log. These responses are transmitted to MAC 402 on subsequent connections.

Resource Locator (RL) 404 maintains a mapping between mobile applications and their remote counter parts. RL 404 further maintains communication profile information such as security algorithms and communication protocols. MAC 402 typically stores the responses received from RAC 407 until the target mobile applications 300A,..,300N retrieve the responses. MAC 402 generally maintains logs for the outgoing requests as well as for the incoming responses. The requests are stored in the request log and remain there until they are transmitted or explicitly removed by the originating applications. Similarly, the responses are saved in the response log until they are retrieved by the target applications.

The applications on a mobile device 210 interact with the mobile application coordinator 402 on the mobile device to send and receive messages to remote applications 410A,..,410N. Such interactions between the mobile applications 300A,..,300N and the mobile application coordinator 402 are governed by the mobile application interaction protocol (MAIP). The protocol supports registration, mobile request handling, log and archival services. When an application 300A,..,300N registers with the MAIP, each mobile application 300A,..,300N is assigned a unique identifier which is used by a mobile application to identify itself to the mobile application coordinator on subsequent interactions. The registration service allows a mobile application 300A,..,300N to register itself with the mobile application coordinator 402 and to specify the services it intends to use. A logging service is an example of a service the mobile applications 300A,..,300N may specify during registration. A message handling service is typically used by the mobile applications 300A,..,300N to deliver request messages and retrieve response messages to and from the mobile application coordinator 402.

Generally, RAC 407 provides message routing and message storage functionality. RAC 407 routes the individual messages to corresponding remote applications 410A,..,410N. The remote applications 410A,..,410N service the request and return appropriate responses to RAC 407. These responses are transmitted to the mobile application coordinator 402 on subsequent connections. Additionally, RAC 407 provides for message archiving, storage, and retrieval.

The interactions between the mobile application coordinator 402 and the remote application coordinator 407 are governed by the Application Coordinator Interaction Protocol (ACIP). ACIP supports both pull and push models. The pull model allows the clients to retrieve information at their convenience. The push model allows the server to transmit information to the clients. For instance, the client may retrieve the responses when it needs to, and likewise, the server proactively may send responses to the client.

In the preferred embodiment, the mobile application coordinator manages the storage on the mobile device in terms of messages. Each message, therefore, is treated as a single unit. Because of limited storage availability on a typical mobile device, and to minimize the storage used, the application coordinator 402 implements a variety of storage management policies. Such policies may include discarding messages which have been stored for more than a predetermined period of time, e.g., seven days. The discarded messages may still be retrieved from RAC 407 when a connection is established subsequently. Another policy may specify that all log messages be archived with the remote application coordinator 407 immediately.

The MAC 402 and RAC 407 pair which are generally built on top of a reliable message service, promotes efficient utilization of scarce mobile device resources by simplifying mobile applications.

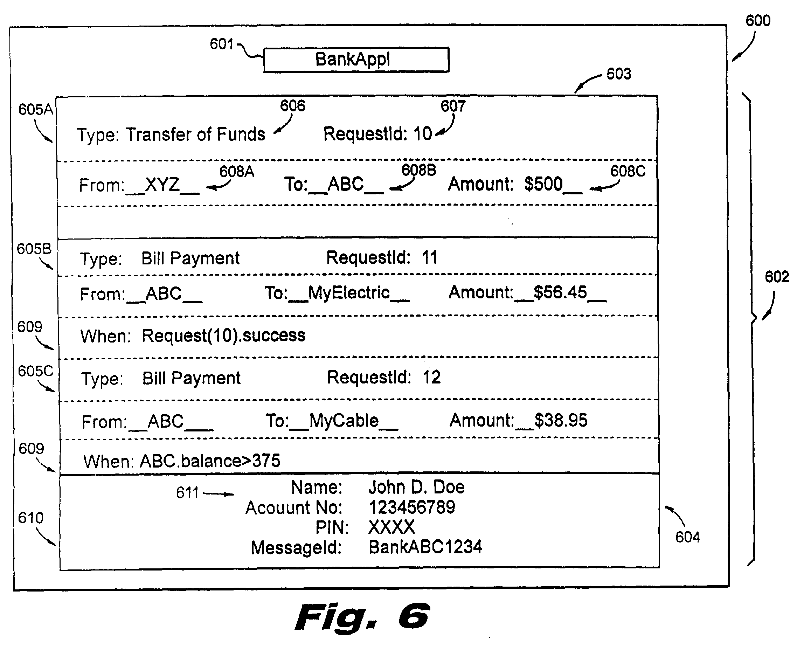

The user interface (UI) 310 module enables the user to compose requests and view responses to prior requests. A typical request composition screen display is shown in Figure 6. The application name 601 is displayed at the top of the screen. In the preferred embodiment, the message composition area 602 includes two sections: 1) Message section 603, and 2) Identification section 604. The message section 604 includes one or more service requests.

With the user interface (UI) 310 module, a user may enter any number of requests at one time. Figure 6 illustrates three requests 605A, 605B, and 605C entered using the user interface 310 module. Each individual request includes a type field 606, identifier field 607, request operand fields 608A, 608B, 608C, and constraints field or dependency field 609. In Figure 6, the first request 605A shown is of type transfer of funds, and has a request identifier of 10. The operation specifies that funds of amount $500 be transferred from "XYZ" account to "ABC" account. The second request 605B shown is of type bill-payment, and has a request identifier of 11. This request includes instructions to pay the electricity bill if the previous request with identifier of 10 is executed successfully as shown at 609. This is an example of a dependency. The third request 605C is of the type bill- payment, and has a request identifier of 12. This request includes instructions to pay cable bill if the "ABC" account has funds in excess of $375. This is an example of a constraint. The information in this section may be encrypted using well known encryption techniques such as the RSA encryption.

The Identification section includes information required to authenticate and authorize the service requested. As shown in Figure 6, the identification section 610 includes a user name 611, account number, password information, and message id. Alternatively, this section may include a digital signature identifying the requester. Like any other data, the information in this section may be encrypted before being transmitted using any one of well known encryption techniques.

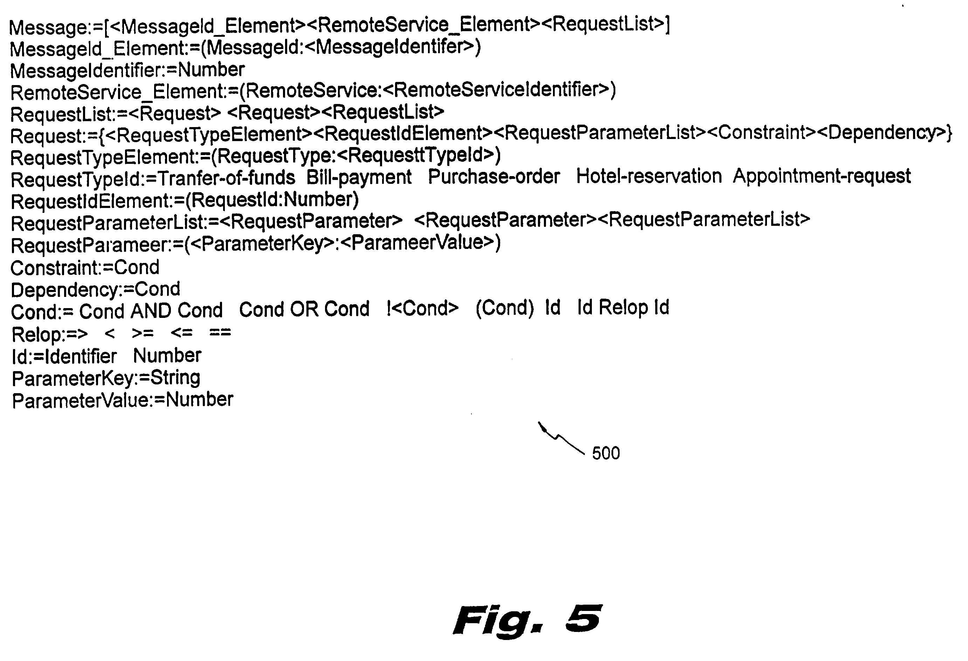

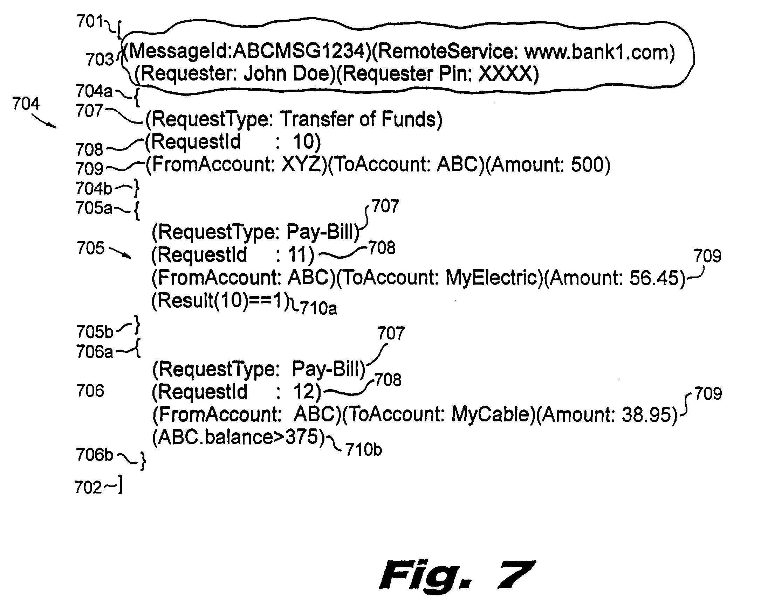

The message formatter (320 Figure 3) of this invention generally is used to automatically transform the request composed by the user interface 310 (UI) module into a format suitable for transmission over communications channels, and suitable for interpretation by the server. For the translation purposes a grammar similar to the one shown in the Figure 5 is used. Figure 7 shows the output of message formatter for the request shown in Figure 6. The beginning 701 and the ending 702 of the message are indicated by square brackets as shown. The identification section 703 typically applies to the entire message. As described above, the information in this section is used for authentication and authorization purposes. The message is composed from one or more requests as entered via the UI 310. Figure 7 illustrates three requests 704, 705, and 706, each request delimited by curly brackets 704a and 704b, 705a and 705b, 706a and 706b respectively. Each request has a type tag 707 identifying the type of the request, unique identification number 708, operating instructions 709, and optionally, conditions 710a, 710b under which the operation should be carried out. A request may specify the results of execution of a prior message 710a as one of the conditions for processing the current request, as shown in Figure 7. In the preferred embodiment, the requests are serviced in the order they are arranged.

While the invention has been particularly shown and described with respect to a preferred embodiment thereof, it will be understood by those skilled in the art that the foregoing and other changes in form and details may be made therein without departing from the scope of the invention.

## Claims

1. A method for performing complex transactions in a computer network in which a mobile client device communicates with a server device, the method including building complex transactions on the mobile client device while disconnected from the server device, including the steps of:
specifying one or more operations associated with service requests to be performed by one or more remote servers;
specifying constraints associated with said one or more operations, the constraints describing one or more conditions under which said one or more operations can be performed;
formatting said one or more operations with the constraints into a message forming a complex transaction for transmission over a communication medium; and
storing the formatted message in a local memory.

2. The method as claimed in claim 1, further including:
specifying remote resources associated with said one or more remote servers for servicing the requests incorporated in said one or more operations; and
the step of formatting includes formatting according to a predetermined grammar said one or more operations with the constraints and the remote resources into a message forming the complex transaction for transmission over a communication medium.

3. The method as claimed in claim 2, further including:
transmitting the message forming the complex transaction to the server device any time after establishing a connection thereto.

4. The method as claimed in claim 3, further including:
receiving one or more results of processing of the complex operations from the server device.

5. The method as claimed in claim 3, wherein the method further including:
receiving the message forming the complex transaction at a server node;
interpreting the message according to the predetermined grammar into said one or more operations to be performed under the specified constraints;
communicating said one or more operations to the remote resources for servicing said one or more operations.

6. The method as claimed in claim 5, further including:
executing said one more operations at the remote resources; and
storing the results of the execution in persistent memory.

7. The method as claimed in claim 6, further including:
communicating the results of the execution to the mobile client device any time after a connection with the mobile client device is established.

8. A method for processing one or more operations which specify service requests by a mobile client to be processed by one or more server devices, the method including:
receiving a message having a complex transaction;
extracting according to a predetermined grammar from the message said one or more operations including constraints specifying conditions under which said one or more operations can be performed;
saving said one or more operations in a persistent store;
transforming said one or more operations into a server device readable instructions;
communicating the instructions to said one or more server devices to be executed accordingly.

9. The method as claimed in claim 8, the method further including:
receiving from said one or more server devices the results of execution of the instructions; and
saving the results in a persistent store.

10. The method as claimed in claim 8, the step of specifying constraints further including specifying as a condition for performing said one or more operations, the results of a previous operation executed by said server one or more server devices.

11. The method as claimed in claim 9, the method further including:
communicating the results to the mobile client any time after a connection thereto is established.

12. A program storage device readable by machine, tangibly embodying a program of instructions executable by the machine to perform method steps for enabling a user to build complex transactions on a mobile device while disconnected from a server device, the method steps comprising:
specifying one or more operations associated with service requests to be performed by one or more remote servers;
specifying constraints associated with said one or more operations, the constraints further describing one or more conditions under which said one or more operations can be performed;
formatting said one or more operations with the constraints into a message forming a complex transaction for transmission over a communication medium; and
storing the formatted message in a local memory.

13. The program storage device as claimed in claim 12, wherein the method steps further include:
specifying remote resources associated with said one or more remote servers for servicing the requests incorporated in said one or more operations; and
the step of formatting includes formatting according to a predetermined grammar said one or more operations with the constraints and the remote resources into a message forming the complex transaction for transmission over a communication medium.

14. The program storage device as claimed in claim 13, wherein the method steps further include:
transmitting the message forming the complex transaction to the server device after establishing a connection thereto.

15. The program storage device as claimed in claim 14, wherein the method steps further include:
receiving one or more results of processing of the complex operations from the server device.

16. A program storage device readable by machine, tangibly embodying a program of instructions executable by the machine to perform method steps for receiving one or more operations which specify services to be processed, the method steps comprising:
receiving a message having a complex transaction;
extracting according to a predetermined grammar from the message said one or more operations including constraints specifying conditions under which said one or more operations can be performed;
saving said one or more operations in a persistent store;
transforming said one or more operations into a server device readable instructions;
communicating the instructions to said one or more server devices to be executed accordingly.

17. The program storage device as claimed in claim 16, wherein the method steps further include:
receiving from said one or more server devices the results of execution of the instructions; and
saving the results in a persistent store.

18. The program storage device as claimed in claim 17, wherein the method steps further include:
communicating the results to the mobile client any time after a connection thereto is established.

19. A mobile client device in which complex transactions may be built while disconnected from a server device, the mobile client device including:
a mobile application module for receiving data input indicating one or more user service requests, the mobile application module being responsive to the data input received to transform the data input relating to said one or more user service requests into a message format forming a complex transaction; and
a mobile application coordinator for communicating with the mobile application and receiving the complex transaction, the mobile application coordinator further accumulating one or more said complex transactions for transmission to the servicing node after a connection is established.
